# EUROPEAN PATENT APPLICATION

(11) **EP 2 051 250 A1**
(43) Date of publication of application: **22.04.2009**
(21) Application number: 08160539.6
(22) Date of filing: 16.07.2008
(51) Int. Cl.: G11B 7/24, G11B 7/004, G11B 7/007

(54) **Information recording medium**

(30) Priority: 20.07.2007 JP 2007189893
(71) Applicant: Kabushiki Kaisha Toshiba, Minato-ku, Tokyo 105-8001 (JP)
(72) Inventor: Morita, Seiji Toshiba Corporation, Minato-ku Tokyo 105-8001 (JP); Takazawa, Koji Toshiba Corporation, Minato-ku Tokyo 105-8001 (JP); Morishita, Naoki Toshiba Corporation, Minato-ku Tokyo 105-8001 (JP); Umezawa, Kazuyo Toshiba Corporation, Minato-ku Tokyo 105-8001 (JP); Nakamura, Naomasa Toshiba Corporation, Minato-ku Tokyo 105-8001 (JP)
(74) Representative: Henkel, Feiler & Hänzel

(57) **Abstract**

An information recording medium including one embodiment according to the present invention is characterized in that it has a recording film (103) using an organic recording material recorded by recording light having a wavelength of 405 nm and an organic recording material whose light reflection quantity varies by reproducing light having a wavelength of 650 nm for a recording layer and an optical reflection layer and a land (109) sandwiched between a pre-groove (107) having an irregular shape and an adjoining pre-groove is provided on an interface between the recording layer and the optical reflection layer.

## Description

The present invention relates to an information recording medium that can record a moving image with a higher definition than that in a DVD standard for a long time and conforms to a CSS protection standard.

A long time has passed since an information recording medium, i.e., an optical disc in which information can be recorded and reproduced by using a laser beam was put to practical use. For example, in an optical disc with a diameter of 12 cm conforming to the DVD standard, pictures having a standard image quality can be recorded for several hours. Further, in a reproduction-only optical disc, picture software or contents can be recorded in a short time based on press working or molding. It is to be noted that a land pre-pit and a groove track (a pre-groove) are formed in an optical disc in which information can be written (write-once) or erased (rewriting). In a currently commercially available DVD-R disc or a DVD-RW disc, address information is previously recorded by using a land pre-pit, and a recording mark is formed on a wobbled pre-groove.

In a currently commercially available DVD-R disc or a DVD-RW disc as a recording type optical disc, address information is previously recorded by using a land pre-pit, and a recording mark is formed on a wobbled pre-groove.

A reproduction signal from the land pre-pit or the pre-groove is utilized to reproduce the address information or used as a tracking servo signal. In order to perform stable tracking or accurately reproduce the address information, a shape of the land pre-pit or the pre-groove is optimized to provide the reproduction signal for such an operation as a large signal.

Further, at the present day, an optical disc conforming to a DVD standard utilizing a protection scheme called CSS (Content Scrambling System) has been put to practical use.

Due to emergence of such plural kinds of optical discs, a single optical head apparatus capable of recording information on each of optical discs of three standards including optical discs of the HD DVD Standard or reproducing information from each of the optical discs is required.

Japanese Patent Application Publication (KOKAI) No. 2002-83423 does not describe relevance to CSS but introduces an example of using laser beams having different wavelengths for recording and reproduction.

However, the optical recording medium in the Publication having a recording film containing an organic dye and a reflection film is irradiated with a recording laser beam from a substrate side to write information, the organic dye is discolored after recording, and a reproduction laser beam having a wavelength different from that of the recording laser beam is used to reproduce the information.

However, the optical recording medium in the Publication has a description that a laser beam having a wavelength of approximately 770 nm or 650 nm is used as the recording laser beam and a laser beam having a shorter wavelength is used as the reproduction laser beam, and a recording density does not exceed the DVD standard.

Therefore, in the optical recording medium disclosed in the Publication, recording a high-definition moving image for a long time like an optical disc conforming to an HD DVD standard which has been already put to practical use or an optical disc conforming to a Blu-ray standard is difficult.

An object of the invention is to provide an information recording medium using a light having different wavelengths can be used as recording light required to form the recording mark and reproducing light required to reproduce the recording mark, and hence recording processing and reproduction processing can be stably effected.

According to an aspect of the invention, there is provided an information recording medium comprising:
a recording film (103) including a recording layer and an optical reflection layer; and
a land (109) which is sandwiched between a pre-groove and an adjoining pre-groove (107) and formed on an interface between the recording layer and the optical reflection layer,
wherein the recording film has a light reflectivity that enables reproduction by using light of 650±5 nm,
the recording layer has a recording sensitivity with respect to light having a shorter wavelength than 650±5 nm,
the recording layer enables formation of a recording mark on the pre-groove by using the light having a shorter wavelength than 650±5 nm, and
a reflectivity is not smaller than 45%, and a push-pull signal after recording is not greater than 0.17.

The invention can be more fully understood from the following detailed description when taken in conjunction with the accompanying drawings, in which:
FIG. 1 is an exemplary diagram showing an example of a cross-sectional structure of a recording region in a recording medium according to an embodiment of the invention;
FIG. 2 is an exemplary diagram showing an example of a cross-sectional structure of a recording region in a recording medium according to an embodiment of the invention;
FIGS. 3A to 3C are exemplary diagrams, each showing an example of a relationship between a pre-groove dimension and a land pre-pit dimension of a recording medium of FIGS. 1 and 2 and a wavelength of recording light according to an embodiment of the invention;
FIG. 4 is a graph showing an example of an organic dye recording material used in a recording layer of an optical disc shown in FIGS. 1, 2, 3A, 3B and 3C according to an embodiment of the invention;
FIGS. 5A to 5C are exemplary diagrams each showing an example of a structural formula of a blue-based dye that can be used in a recording layer of an optical disc of this proposal (cation dye portion with cation anion metal complex portion) according to an embodiment of the present invention;
FIGS. 6A to 6C are exemplary diagrams each showing an example of a structural formula of a red dye that can be used in a recording layer of an optical disc of this proposal (penta-methine cyanine dye portion with cation anion metal complex portion) according to an embodiment of the invention;
FIGS. 7A to 7C are exemplary diagrams each showing an example of a structural formula of a red-based dye that can be used in a recording layer of an optical disc of this proposal (penta-methine hemicyanine dye: S-phenyl portion with cation anion metal complex portion) according to an embodiment of the invention;
FIGS. 8A to 8C are exemplary diagrams each showing an example of a structural formula of a red-based dye that can be used in a recording layer of an optical disc of this proposal (penta-methine hemicyanine dye/penta-methine hemicyanine dye: azo group portion with cation anion metal complex portion) according to an embodiment of the invention;
FIG. 9 is an exemplary diagram showing an example of a structural formula of a red-based dye that can be used in a recording layer of an optical disc of this proposal according to an embodiment of the invention;

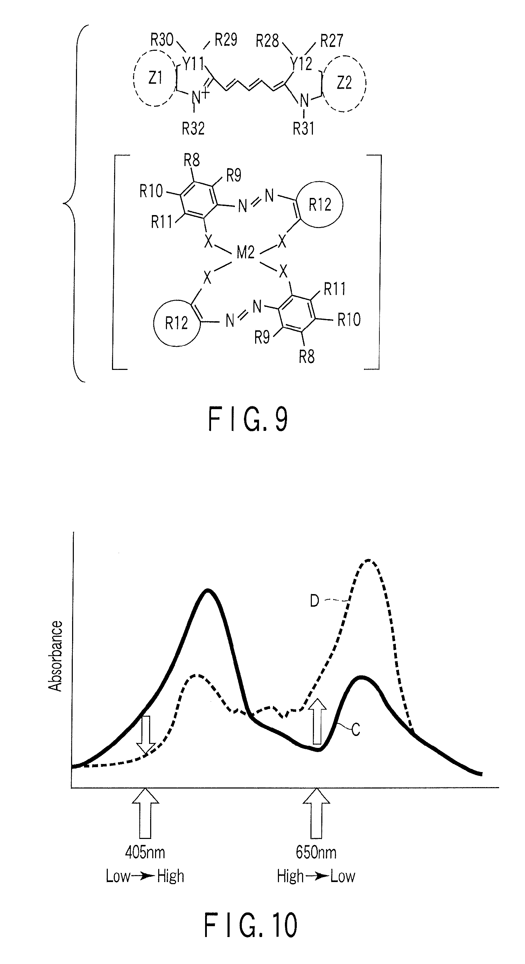

FIG. 10 is an exemplary diagram showing an example of light absorption spectra using a dye material in a series whose quantity of returning reflected light is lowered as compared with any other portion (the quantity of reflected light is changed from H: High to L: Low (H-to-L)) due to a difference in light absorption of a reproduction laser beam, i.e., a red-based dye having a wavelength of approximately 650 nm in a recording mark when combining a blue-based dye and the red-based dye that can be used in a recording layer of an optical disc of this proposal according to an embodiment of the invention;
FIG. 11A is an exemplary diagram showing an example of a structure of an azo Cu complex alone (a red-based dye demonstrating absorption characteristics depicted in FIG. 10) according to an embodiment of the invention;
FIG. 11B is an exemplary diagram showing an example of a structure obtained by adding an Co azo complex and an anion to a cyanine cation (a red-based dye demonstrating absorption characteristics depicted in FIG. 10) according to an embodiment of the invention;
FIG. 12 is an exemplary diagram showing an example of a structure of a recording region in the write-once information recording medium shown in FIG. 2, according to an embodiment of the invention;
FIGS. 13A to 13D are exemplary diagrams, each showing an example of a data structure of the recording region in the write-once information recording medium shown in FIG. 2, according to an embodiment of the invention;
FIGS. 14A and 14B are exemplary diagrams showing an example of physical format information and R physical format information having the data structure shown in FIGS. 12, according to an embodiment of the invention;
FIG. 15 is an exemplary diagram showing examples of physical format information and R physical format information in a data region DTA having the data structure shown in FIG. 13, according to an embodiment of the invention;
FIG. 16 is an exemplary diagram showing examples of a current picture information distribution system according to an embodiment of the invention;
FIG. 17 is an exemplary diagram showing examples of a picture information distribution system achieved by using the information recording medium of the present invention according to an embodiment of the invention;
FIG. 18 is an exemplary diagram showing an example of a picture information distribution system achieved by using the information recording medium of the present invention according to an embodiment of the invention;
FIG. 19 is a graph showing an example of a relationship between a groove width and a push-pull signal (PPa) of a reproduction signal according to an embodiment of the invention;
FIG. 20 is a graph showing an example of a relationship between a groove depth and a push-pull signal (PPa) of a reproduction signal according to an embodiment of the invention;
FIG. 21 is a graph showing an example of a relationship between a jitter (an error rate) and a groove width according to an embodiment of the invention;
FIG. 22 is a graph showing an example of a relationship between a signal modulation degree and a groove depth according to an embodiment of the invention; and
FIG. 23 is an exemplary diagram showing an example of results of reproducing an information recording medium of the present invention by a plurality of readily available disc drive devices according to an embodiment of the invention.

An embodiment according to the present invention will now be explained hereinafter in detail with reference to the accompanying drawings.

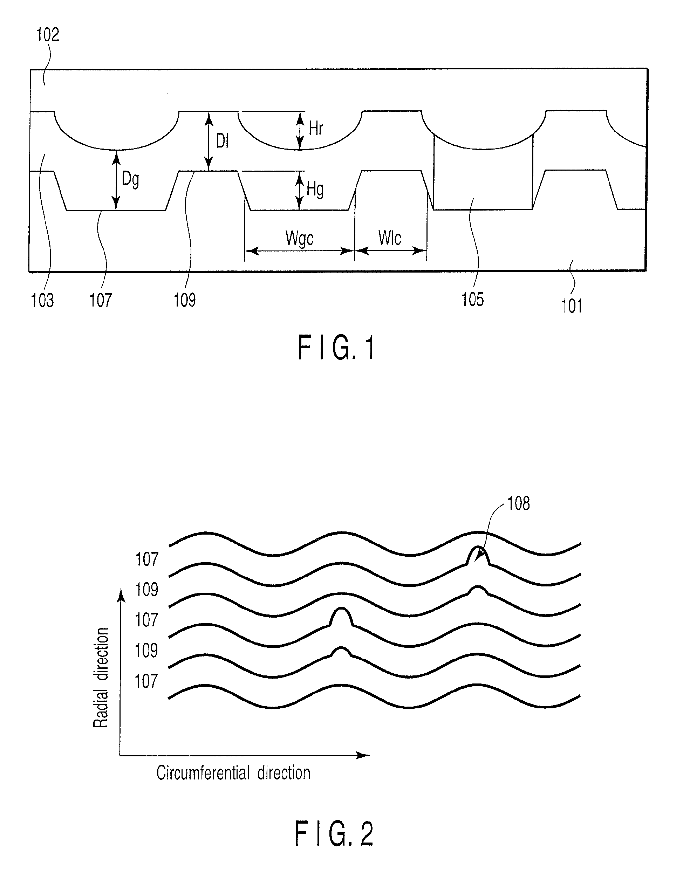

FIGS. 1 and 2 show a fine structure in an information recording medium according to this proposal. FIG. 1 is a cross-sectional view of an information recording medium, and FIG. 2 is a view showing a groove arrangement of the information recording medium from above. In FIG. 1, each land pre-pit 108 depicted in FIG. 2 is omitted.

An organic-dye-based material is used as a material of a recording layer 103 in a write-once information recording medium in this proposal, and an optical recording layer 102 made of an inorganic material, e.g., Ag or an Ag alloy is formed to be adjacent to the recording layer 103.

On an interface between the recording layer 103 and the optical reflection layer 102, an irregular shape having steps Hr is formed in a pre-groove 107 or a land pre-pit 108 portion. Although the irregular shape is also present on an interface of the optical reflection layer 102 on an opposite side, FIG. 1 shows a view taken along the center of the optical reflection layer 102 since a thickness of the optical reflection layer 102 is sufficiently large, and the irregular shape on the interface on the opposite side is omitted in this drawing.

Although an example where an organic-dye-based material is used as the recording layer 103 in the write-once information recording medium in this proposal will be explained below, the present invention is not restricted thereto, and an inorganic material may be used as a material of the recording layer 103. As an example where an inorganic material is used as a material of the recording layer 103, a phase change type (a phase change is utilized to form a recording mark 105) recording material, e.g., a chalcogenide-based material can be used, or a hole may be directly formed to produce each recording mark 105 like Te-C or a plurality of different inorganic layers may be laminated and a mixture or a compound may be formed in the recording mark 105 based on diffusion using heat.

In a recording medium as a proposal according to the present invention, light having a wavelength shorter than 650 nm as a first wavelength is used to record information, and light having a wavelength of 650 nm as a second wavelength is used to reproduce the recorded information. Therefore, as a material of the recording layer, one having a high absorption factor with respect to light having a wavelength shorter than 650 nm is desirable so that recording is enabled with light having a wavelength shorter than 650 nm. Furthermore, a material whose refractive index or reflectivity greatly changes with respect to a wavelength near 650 nm before and after recording is desirable so that recorded data can be reproduced with 650 nm.

The pre-groove 107 is concentrically or spirally formed in a substrate 101 of the information recording medium, and the pre-groove 107 meanders in a radial direction as shown in FIG. 2. This meandering shape is called wobble. Moreover, a shape that the pre-groove protrudes is formed at a part of the land, and this is called the land pre-pit 108.

In case of the information recording medium according to this proposal having the cross-sectional structure depicted in FIG. 1, a track deviation detection signal using a push-pull method or a detection signal from the land pre-pit 108 can be obtained based on diffraction/interference of light reflected on the interface between the recording layer 103 and the light reflection layer 102 having each step Hr.

Characteristics of the structure of the information recording medium according to the present invention will now be explained.

In the proposal according to the present invention, the recording/reproducing apparatus is significantly characterized in that a usable wavelength of recording light is different from that of reproducing light and an information recording medium that guarantees excellent recording characteristics and reproduction characteristics with respect to the recording light and the reproducing light having different wavelengths is provided. Additionally, the recording/reproducing apparatus is also characterized in that a shape and a dimension of the pre-groove and a shape and a dimension of the land pre-pit are set so that a track deviation detection signal and a land pre-pit detection signal can be obtained with respect to the recording light and the reproducing light is hardly affected by the pre-groove or the pre-pit. In the current DVD-R disc or DVD-RW disc, a value of 650±5 nm is premised as a wavelength of the reproducing light.

In the information recording medium according to this proposal, information can be reproduced by using light having a wavelength of 650±5 nm to assure mutual compatibility between the DVD-R disc or the DVD-RW disc.

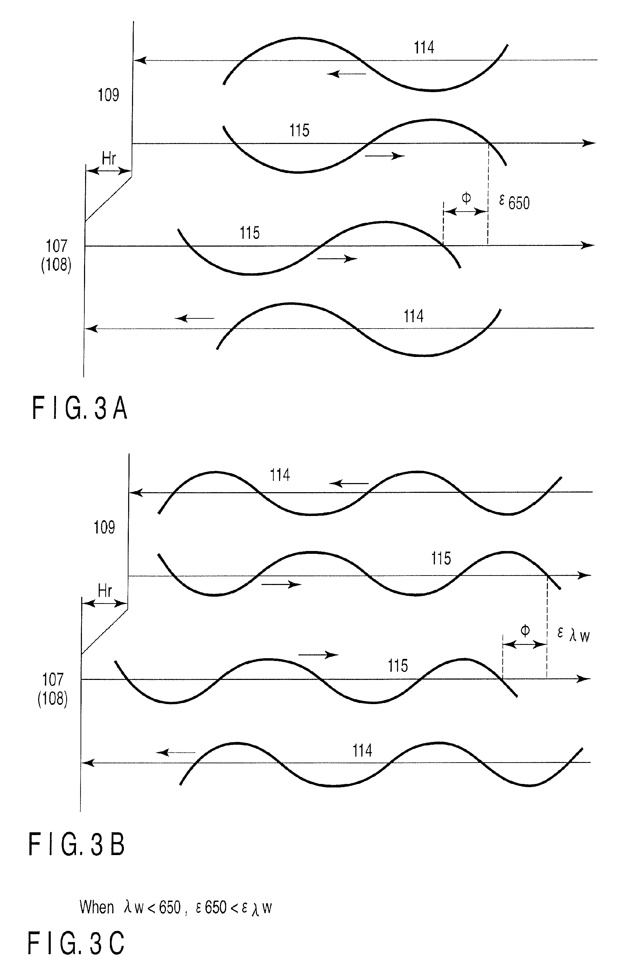

A relationship between a wavelength of the recording light and both a pre-groove dimension and a land pre-pit dimension that enable obtaining a track deviation detection signal and a land pre-pit detection signal with respect to the recording light and prevent the reproducing light (light having a wavelength of 650±5 nm) from being hardly affected by the pre-groove or the pre-pit will now be explained with reference to FIG. 3.

As explained above, the track deviation detection signal using the push-pull method or the detection signal from the land pre-pit 108 is obtained based on diffraction/interference of light reflected on the interface between the recording layer 103 and the light reflection layer 102 (see FIG. 2). A situation where incident lights 114 having different wavelengths enter the pre-groove 107 having the steps Hr or both the land pre-pit 108 and the land 109 will be explained.

FIG. 3A shows an example where reproducing light having a wavelength of 650 nm is applied, and ε₆₅₀ denotes a phase difference given to reflected light 115 vertically reflected with respect to the pre-groove 107 or the land pre-pit 108 and the land 109 by each step Hr.

FIG. 3B shows an example where recording light having a wavelength λw different from that of the reproducing light is applied. ε_{λw} is a phase difference given to the reflected light 115 obtained from the recording light by the step Hr.

As shown in FIG. 3C, if amounts of the respective steps Hr are equal to each other, a relationship of ε₆₅₀<ε_{λw} is achieved when λw<650 nm.

If ε₆₅₀<π and ε_{λw}<π, an amount of interference between the reflected lights 115 is increased when the phase difference ε is large, and the large track deviation detection signal and the large land pre-pit detection signal can be obtained. Further, the interference between the reflected lights 115 is reduced when the phase difference ε is small, and an adverse impact hardly occurs from the pre-groove or the pre-pit. Therefore, this proposal is significantly characterized in that the wavelength λw of the recording light is shortened (λw<650 nm) with respect to the wavelength (650±5 nm) of the reproducing light so that the track deviation detection signal and the land pre-pit detection signal can be obtained with respect to the recording light and the reproducing light is hardly affected by the pre-groove or the pre-pit.

As a value of the wavelength λw used for the recording light, an arbitrary value can be taken as long as it is smaller than 650 nm. However, since a semiconductor laser beam source having an emission wavelength of 405 nm is used in an HD DVD or a BD (Blu-Ray disc), likewise using a beam source with an emission wavelength of 405 nm enables producing a recording optical head at a low cost.

Here, assuming that n₆₅₀ is a refractive index in the recording layer 103 with respect to the reproducing light having 650±5 nm as the second wavelength, the largest land pre-pit detection signal and track deviation detection signal can be detected when a depth (the step) Hr of the pre-groove equal to a depth (the step) of the land pre-pit is "650/(8.n₆₅₀) nm". Therefore, in this proposal, as conditions avoiding an adverse impact at the time of reproduction, each of the depth (the step) of the pre-groove and the depth (the step) Hr of the land pre-pit is set to a half value, i.e., "650/(16·n₆₅₀) nm" or below. Furthermore, as conditions further avoiding the adverse impact, it is desirable to set it to a value that is 1/2 of the above value, i.e., "650/(32·n₆₅₀) nm" or below.

Here, assuming that the wavelength of the recording light having the first wavelength is 405 nm, each of the depth (the step) of the pre-groove and the depth (the step) Hr of the land pre-pit during recording is "405/(10·n₄₀₅) nm (=650/405×405/(16·n₆₅₀) nm)", and signals from the pre-groove and the land pre-pit can be reproduced during recording.

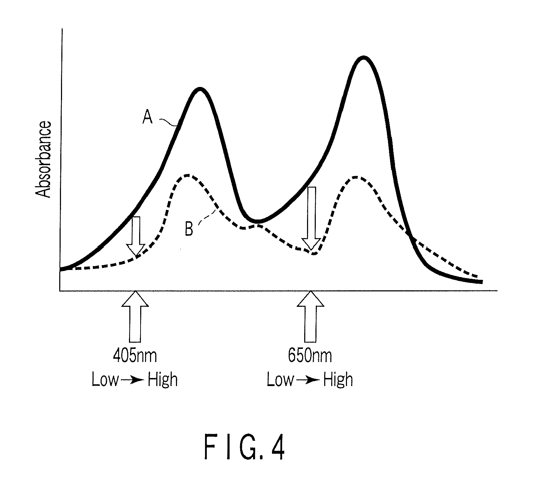

FIG. 4 shows an example of light absorption spectra of an organic dye recording material used in the recording layer 103 of the optical disc according to the present proposal depicted in FIGS. 1, 2, 3A, 3B and 3C. It is to be noted that, in FIG. 4, a curve A represents absorption (an absorbance) of the organic dye material before recording and a curve B represents absorption (an absorbance) of the organic dye material after recording, respectively. It is to be noted that, as apparent from FIG. 4, the recording layer of the optical disc used in this proposal is significantly characterized in that an organic recording material recorded by using recording light having a wavelength of 405 nm (which will be referred to as a blue-based dye hereinafter) is mixed (combined) with an organic recording material whose light reflection quantity varies by reproducing light having a wavelength of 650 nm (which will be referred to as a red-based dye hereinafter).

As shown in FIG. 4, the absorbance of the recording material used in this proposal for the light having the wavelength of 405 nm after recording becomes lower than that before recording (a quantity of reflected light is increased).

That is, the light having the wavelength of 405 nm enters from the transparent substrate 101 side in FIG. 1, is reflected on the optical reflection layer 102 via the recording layer 10, and then returns through the recording layer 103.

Since light absorption in the recording mark 105 is lowered in this light path, the quantity of returning reflected light is increased as compared with any other position (the quantity of reflected light is changed from L: Low to H: High (L-to-H)).

At this time, a hole is not formed in the recording mark 105, but an electron orbit changes within a molecule due to a change in molecular arrangement or a small change in molecular configuration, thereby varying optical characteristics.

A specific organic recoding material in this proposal is obtained by combining a hemicyanine cation with a material in which 10% of an azo dye which is not a metal complex to achieve high sensitivity is added in an azo Co complex anion (a kind of an azo-based metal complex) using Co (cobalt) as a central metal.

This proposal is not restricted thereto, and it is possible to adopt a material obtained by combining a monomethine cyanine cation with a material in which 10% of an azo dye is added to an azo Co complex anion.

As other application examples, a styryl cation may be combined with a material in which 10% of an azo dye is added to an azo Co complex anion may be used, or an azo Cu complex alone using Cu (Copper) may be used as a central metal, or an azo Ni complex anion alone using Ni (Nickel) may be used as a central metal.

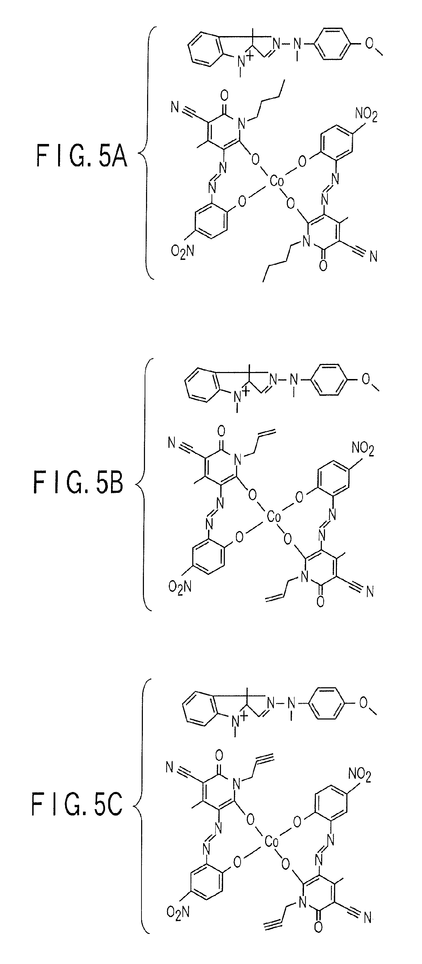

Each of FIGS. 5A to 5C shows an example of a structural formula of a blue-based dye, i.e., an organic recording material (a cation dye portion and a cation anion metal complex portion) recorded by recording light having a wavelength of 405 nm. It is to be noted that, e.g., a hemicyanine or a hemicyanine: azo group can be used as the dye portion.

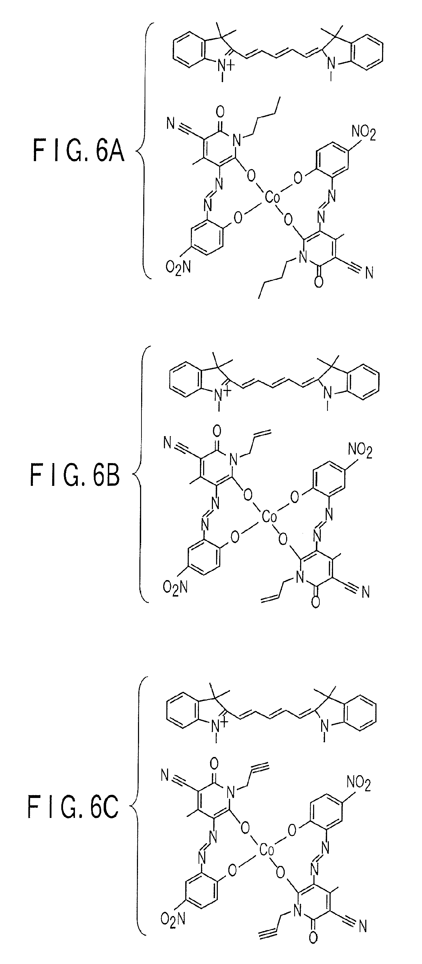

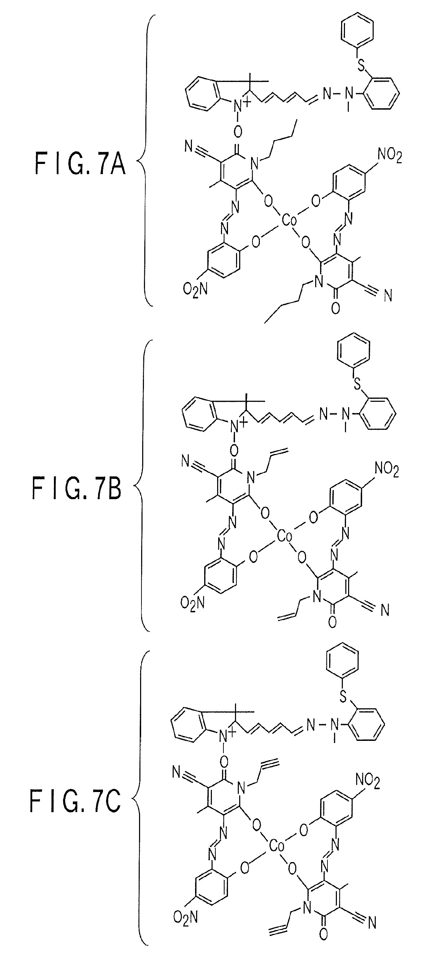

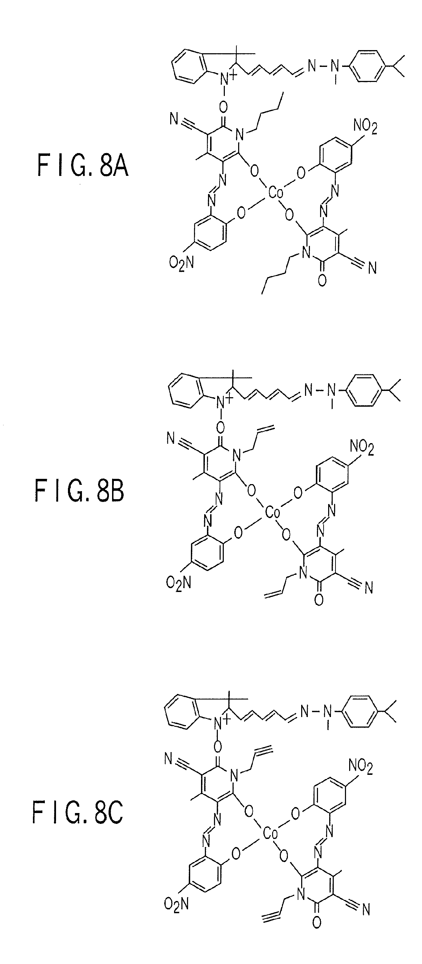

Further, each of FIGS. 6A to 6C, FIGS. 7A to 7C, and FIGS. 8A to 8C shows an example of a structural formula of a red-based dye, i.e., an organic recording material recorded by recording light having a wavelength of 650 nm. It is to be noted that, in each of FIGS, 5A, 6A, 7A, and 8A, a structure of the dye portion differs but an anion complex (a metal complex) portion that is combined to be used is the same throughout these drawings. Furthermore, in each of FIGS. 5B, 6B, 7B, and 8B or FIGS. 5C, 6C, 7C, and 8C, a structure of the dye portion differs, and a metal complex (cation anion) portion that is combined to be used is the same except that a carbon number is changed as shown in each drawing. It is to be noted that, as the dye portion, a penta-methine cyanine (FIGS. 6A to 6C), a penta-methine cyanine: S-phenyl group (FIGS. 7A to 7C), a penta-methine hemicyanine, or a penta-methine hemicyanine: azo group (FIGS. 8A to 8C) can be utilized, for example.

The metal complex (cation anion) portion shown in each of FIGS. 5A, 6A, 7A, and 8A is, e.g., a mixed dye obtained from an organic metal complex cation anion W (a name in a general formula) including a cation and an organic metal complex anion and an organic metal complex Y alone (a name in the general formula), and it is a mixture of a B dye (a name in the general formula), a W dye (a name in the general formula), and a Y dye (a name in the general formula). Moreover, although not explained in detail, in regard to an example of Y, "Co" is selected as M and "Cl" is selected as R. It is to be noted that a mixing weight ratio of B, W, and Y is 0.7: 0.3: 0.15.

The organic metal complex represented by the formula is generally used in the form of a metal complex in which one or a plurality of the organic metal complex is oriented around a metal (central atom). Examples of the metal element as the central atom are scandium, yttrium, titanium, zirconium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, cadmium, and mercury. X² in the general formula represents a proper anodic ion including an onium ion such as alkyl ammonium ion, a pyridinium ion, and quinolinium ion, for example.

It is to be noted that recording/reproduction characteristics are stabilized by adapting a thermal structure changing temperature or a thermal structure decomposing temperature of the organic recording material whose light reflection quantity changes by reproducing light having a wavelength of 650 nm on a molecular level to the organic recording material that is recorded by recording light having a wavelength of 405 nm.

When forming the recording mark 105, a temperature of the organic recording material recorded by the recording light having the wavelength of 405 nm is increased, and a change in molecular arrangement or a small change in molecular configuration occurs. However, in the organic recording material whose light reflection quantity varies by the reproducing light having the wavelength of 650 nm, a change in molecular arrangement or a small change in molecular configuration likewise occurs in accordance with an increase in temperature at this moment, and hence a principle that the light reflection quantity in the recording mark 105 changes with respect to the reproducing light having the wavelength of 650 mm is produced.

Specifically, since a decomposing temperature for the organic recording material that is recorded by the recording light having the wavelength of 405 nm is 230 to 250 degrees Celsius, the organic recording material whose light reflection quantity changes by the reproducing light having the wavelength of 650 nm is also adapted to this value.

When the above-explained recording material is used, this is an L→H type recording material whose absorbance for the light having the wavelength of 650 nm is lowered after recording as compared with that before recording.

This proposal is technically characterized in that a large reproduction signal amplitude from the recording mark 105 based on the reproducing light having the wavelength of 650 nm can be assured by increasing a mixing ratio (the weight ratio) of the organic recording material whose light reflection quantity varies by the reproducing light having the wavelength of 650 nm to be larger than that of the organic recording material recorded by the recording light having the wavelength of 405 nm.

In this proposal, the mixing ratio (the weight ratio) of the organic recording material whose light reflection quantity changes by the reproducing light having the wavelength of 650 nm is increased to be larger than at least that of the organic recording material recorded by the recording light having the wavelength 405 nm, but the most excellent recording/reproduction characteristics are obtained when a value of [the mixing rate of the organic recording material whose light reflection quantity changes by the reproducing light having the wavelength of 650 nm]: [the mixing ratio of the organic recording material recorded by the recording light having the wavelength of 405 nm] is 7:3.

Additionally, this proposal is not restricted thereto, and the above-explained value may be changed to 9:1.

FIG. 9 shows a structural formula (a general formula) of a blue-based dye depicted in FIGS. 5 to 8, i.e., an organic recording material recorded by recording light having a wavelength of 650 nm.

Z₁ and Z₂ of the penta-methine cyanine dye of the cation portion of the general structural formula shown in FIG. 9 represent aromatic rings which are identical to or different from each other, and these aromatic rings may have substituents. Y₁₁ and Y₁₂ each represent a carbon atom or a hetero atom independently. R₃₁ and R₃₂ each represent an aliphatic hydrocarbon group, and these aliphatic hydrocarbon groups may have substituents. R₂₇, R₂₈, R₂₉, R₃₀, R₃₁ and R₃₂ each represent a hydrogen atom or an appropriate substituent independently. In the case where Y₁₁ and Y₁₂ are hetero atoms, part or all of R₂₇, R₂₈, R₂₉, and R₃₀ do/does not exist.

Penta-methine cyanine dyes used in the embodiment can include dyes obtained when cyclic nucleuses such as an imidazoline ring; an imidazole ring; a benzoimidazole ring; an α-naphthoimidazole ring; a β-naphthoimidazole ring; an indole ring; an isoindole ring; an indorenin ring; an isoindorenin ring; a benzo indorenin ring; a pyridino indorenin ring; an oxazolline ring; an ozazole ring; an isoozazole ring; a benzooxazole ring; pyridino oxazole ring; an α-naphtooxazole ring; a β-naphthoozazole ring; a serenazoline ring; a serenazole ring; a benzoserenazole ring; an α-naphthoserenazole resin; a β-naphthoserenazole ring; a thiazoline ring; a thiazole ring; an isothiazole ring; a benzothiazole ring; an α-naphthothiazole ring; a β-naphthothiazole ring; a terrazoline ring; a terrazole resin; a benzoterrazole ring; an α-naphthoterrazole ring; a β-naphthoterrazole ring; and further, an acrydine ring; an antracen ring; an isoquinoline ring; an isopyrole ring; an imidanoxaline ring; an indandione ring; an indazole ring; an indaline ring; an oxadiazole ring; a carbazole ring: a xantene ring; a quinazoline ring; a quinoxaline ring; a quinoline ring; a chroman ring; a cyclohexane dione ring; a cyclopentane dione ring; a cinnoline ring; a thiodiazole ring; a thiooxazolidone ring; a thiophene ring; a thionaphthene ring; a thiobarbizuric acid ring; a thiohidantoin ring; a tetrazole resin; a triazine ring; a naphthalene ring; a naphthyridine ring; a piperadine ring; a pyradine ring; a pyrazole ring; a pyrazoline ring; a pyrazolidine ring; a pyrazolone ring; a pyrane ring; a pyridine ring; a pyridazine ring; a pyrimidine ring; a pyrilium ring; a pyrolidine ring; a pyroline ring; a pyrol ring; a phenedine ring; a phenantholidine ring; a phenanthorene ring; a phenanthoroline ring; a phthaladine ring; a putheridine ring; a phrazane ring; a phrane ring; a purine ring; a benzene ring: a benzooxadine ring; a benzopirane ring; a morpholine ring; and a rhodaline ring or the like, which are identical to or different from each other, having one or a plurality of substituents, are bonded on both ends of a Penta-methine chain which may have one or a plurality of substituents.

Z₁ and Z₂, for example, penta-methine cyanine dye in a general structural formula represent aromatic rings such as a benzene ring, a naphthalene ring, a pyridine ring, a quinoline ring; and a quinoxaline ring or the like, and these aromatic rings may have one or a plurality of substituents. The substituents, for example, can include: aliphatic hydrocarbon groups such as a methyl group, a trifluoro methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methyl pentyl group, a 2-methyl pentyl group, a hexyl group, an isohexyl group, a 5-methyl hexyl group, a heptyl group, and an octyl group; cycloaliphatic hydrocarbon groups such as a cyclopropyl group, a cyclobutyl group, a cyclopentyl group, and a cyclohexyl group; aromatic hydrocarbon groups such as a phenyl group, a biphenyl group, an o-tryl group, an m-tryl group, a p-tryl group, a xyryl group, a mecityl group, an o-cumenyl group, an m-cumenyl group, a p-cumenyl group; ether groups such as a methoxy group, a trfluoro methoxy group, an ethoxy group, a propoxy group, an isopropoxy group, a buthoxy group, a sec-buthoxy group, a tert-buthoxy group, a pentyloxy group, a phenoxy group, a benzoir oxy group; ester groups such as a methoxycarbonyl group, a trifluoro methoxycarbonyl group, an ethoxycarbonyl group, a propoxycarbonyl group, an acetoxy group, and a benzoir oxy group; halogen groups such as a fluoro group, a chloro group, a bromo group, and an iodine group; thio groups such as a metylthio group, an ethylthio group, propylthio group, butylthio group, and a phenylthio group; sulfurmoyl groups such as a methyl sulfurmoyl group, a dimethyl sulfurmoyl group, an ethyl sulfurmoyl, a diethyl sulfurmoyl group, a propyl sulfurmoyl group, a dipropyl sulfurmoyl group, a butyl sulfurmoyl group, and a dibutyl sulfurmoyl group; amino groups such as a first class amino group, a methyl aznino group, a dimethyl amino group, an ethyl amino group, a diethyl amino group, a propyl amino group, a dipropyl amino group, an isopropyl amino group, a diisopropyl amino group, a butyl amino group, a dibutyl amino group, and a pyperidino group; carbamoyl groups such as a methyl carbamoyl group, a dimethyl carbamoyl group, an ethyl carbamoyl group, a diethyl carbamoyl group, a propyl carbamoyl group, and a dipropyl carbamoyl group; and further, a hydroxy group, a carboxy group, a cyano group, a nitro group, a sulfino group, a sulfo group, and a mecyl group or the like. In a general formula, Z₁ and Z₂ may be identical to or differential from each other of the cation portions shown in FIG. 9.

Y₁₁ and Y₁₂, for example, in a general formula of penta-methine cyanine dye each represent a carbon atom or a hetero atom. Hetero atoms, for example, can include atoms of a fifteenth family and a sixteenth family in the periodic table such as a nitrogen atom, an oxygen atom, a sulfur atom, a selenium atom, or a tellurium atom. The carbon atoms in Y₁₁ and Y₁₂ may be an atom group essentially formed of two carbon atoms such as an ethylene group and a vinylene group, for example. Y₁₁ and Y₁₂ in the general formula of the monomethine cyanine dye may be identical to or different from each other.

R₃₂ and R₃₁ in the general formula of the penta-methine cyanine dye represent aliphatic hydrocarbon groups. Example of the aliphatic hydrocarbon groups can include: a methyl group; an ethyl group; a propyl group; an isopropyl group; an isopropenyl group; a 1-propenyl group; a 2-propenyl group; a butyl group; an isobutyl group; a sec-butyl group; a tert-butyl group; a 2-butenyl group; a 1,3-butadinyl group; a pentyl group; an isopentyl group; a neopentyl group; a tert-pentenyl group; a 1-methyl pentyl group; a 2-methyl pentyl group; a 2-pentenyl group; a hexyl group; an isohexyl group; a 5-methyl hexyl group; a heptyl group, and an octyl group or the like. The aliphatic hydrocarbon groups (R₃₂ and R₃₁) may have one or a plurality of substituents similar to those in Z₁ and Z₂. In addition, R₃₁ and R₃₂ in the general formula of the penta-methine cyanine dye may be identical to or different from each other.

R₂₇ to R₃₀ in the general formula of the penta-methine cyanine dye each represent hydrogen atoms or suitable substituents independently in individual general formulas. The substituents, for example, include: aliphatic hydrocarbon groups such as a methyl group, a trifluoro methyl group, an ethyl group, a propyl group, an isopropyl group, a butyl group, an isobutyl group, a sec-butyl group, a tert-butyl group, a pentyl group, an isopentyl group, a neopentyl group; a tert-pentyl group, a 1-methyl pentyl group, a 2-methyl pentyl group, a hexyl group, an isohexyl group, a 5-methyl hexyl group, a heptyl group and an octyl group; ether groups such as a methoxy group, a trifluoro methoxy group, an ethoxy group, a propoxy group, buthoxy group, a tert-buthoxy group, a pentyl oxy group, a phenoxy group, and a benxoir oxy group; halogen groups such as a fluoro group, a chloro group, a bromo group, and an iodine group; and further, a hydroxy group; a carboxy group; a cyano group; and a nitro group or the like. In the general formula of the monomethine cyanine dye and styryl dye, in the case where Y₁₁ and Y₁₂ are hetero atoms, part or all of R₂₇ to R₃₀ in Z₁ and Z₂ do/does not exist.

Cu, Ni, Y, Al, Fe, Cr and Co or the like are mainly used as M₂.

R₈ to R₁₁ represent a hydroxy group, a hydroxyl (OH) group, a halogen group, a cyano group, a nitro group, an alkyl group, an allyl group, an amino group, an alkyl amino group, a di-alkyl amino group, an allyl amino group, a di-alkyl amino alkyl group, a hetero allyl group, an alkoxy group, an alkyl thio group, an allyl oxy group, and an allyl thio group; an SO₃H, an SO₂, an NR₂₁, a NR₂₂, a CO₂R₂₂, a CONR₂₁, and an NHCOR₂₂; and R₂₁ or R₂₂ in an NR₂₁, a NR₂₂, a CO₂R₂₂, a CONR₂₁, an NHCOR₂₂ each being selected from, a hydroxy group; an alkyl group; and an alkoxy group.

R₁₂, for example, which are identical to or different from each other and contain one or a plurality of hetero atoms selected from among a nitrogen atom, an oxygen atom, a sulfur atom, a selenium atom, and a tellurium atom. These heterocyclic groups, for example, may have one or a plurality of aliphatic hydrocarbon groups such as a methyl group, a trifluoro methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methyl pentyl group, a 2-methyl pentyl group, a hexyl group, an isohexyl group, and a 5-methyl hexyl group; ester groups such as a methoxy carbonyl group, a trifluoro methoxy carbonyl group, an ethoxy carbonyl group, a propoxy carbonyl group, an acetoxy group, a triflyoro acetoxy group, and benzoir oxy group; aromatic hydrocarbon groups such as a phenyl group, a biphenyl group, an o-tryl group, an m-tryl group, a p-tryl group, an o-cumenyl group, an m-cumenyl group, a p-cumenyl group, a xyryl group, a mecityl group, a styryl group, a cinnamoyl group, and a naphtyl group; and further, substituents such as a carboxyl group, a hydroxy group, a cyano group, and a nitro group.

X represent hetero atoms which are identical to or different from each other, the atoms being selected from elements of the sixteenth family in the periodic table. X represent also selected from among a hydroxy, an amino, a carboamino or a sulfonamide.

FIG. 10 shows light absorption spectra when using a dye material in a series whose quantity of returning reflected light with respect to the reproduction laser beam, i.e., the wavelength of approximately 650 nm is lowered (the quantity of reflected light is changed from H: High to L: Low (red H-to-L)) due to a difference in light absorption in the recording mark 105 as compared with any other portion even though the blue-based dye is combined with the red-based dye. It is to be noted that, in FIG. 10, a curve C represents absorption (an absorbance) of the organic dye material before recording and a curve D (a dotted line) represents absorption (an absorbance) of the organic dye material after recording, respectively.

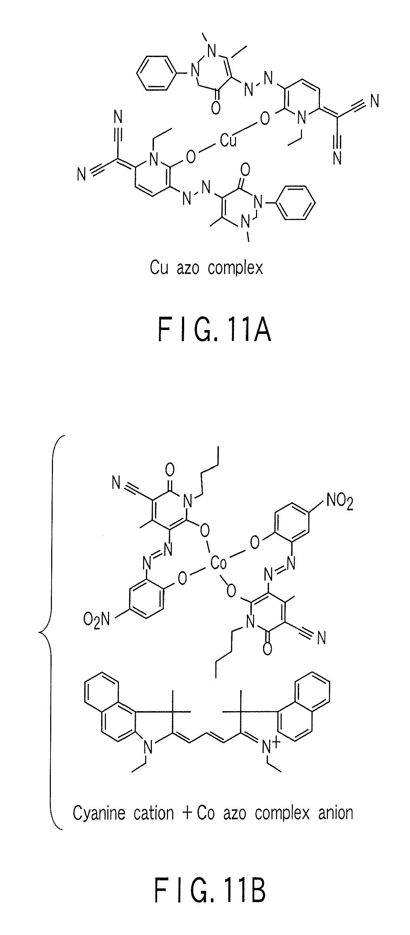

It is to be noted that, as the red-based dye that can be used for the series whose quantity of returning reflected light with respect to the wavelength of approximately 650 nm is lowered (red H-L)) due to a difference in light absorption in the recording mark 105 as compared with any other portion, such an azo Cu complex alone as shown in FIG. 11A or such a combination of a cyanine cation and an azo Co complex anion as shown in FIG. 11B can be used.

An example of a method for further exploiting the recording medium, i.e., the optical disc according to the present proposal based on the CSS protection standard will now be explained.

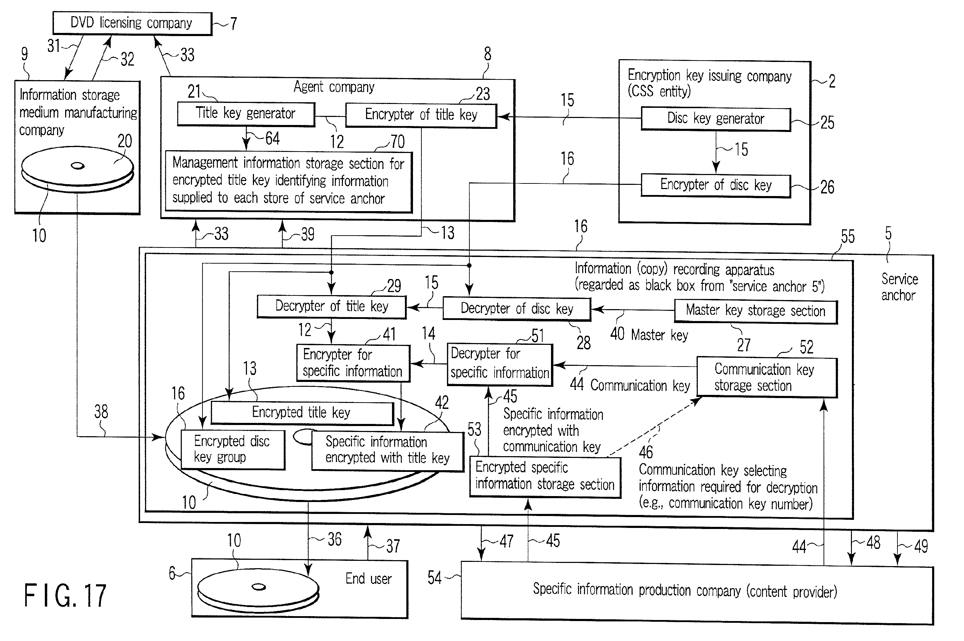

The information storage medium according to the present invention is utilized in network distribution for picture information as shown in FIG. 17.

Encrypted specific information 45 (picture contents 11) transferred from a specific information production company (a content provider) 54 via a network is recorded in an information storage medium 10 by using recording light of 405 nm in an information (copy) recording apparatus 55 in a service anchor 5.

An end user 6 uses reproducing light of 650 nm to reproduce the picture contents 11 from the information storage medium 10 having the information recorded therein in this manner.

The present invention assumes the following two methods as a method of using the information storage medium.

One method is a method of distributing the encrypted specific information 45 (the picture contents) 11 to the service anchor 5 through the network as shown in FIG. 17 so that the specific information 45 is recorded in the information storage medium 10 in the service anchor 5, and it is called MOD (Manufacturing on Demand).

Moreover, the other method is a method of directly distributing the specific information 45 to the end user 6 and using the recording light of 405 nm in the recording apparatus owned by the end user 6 to record the specific information 45 in the information storage medium 10, and it is called EST (Electric Sell Through).

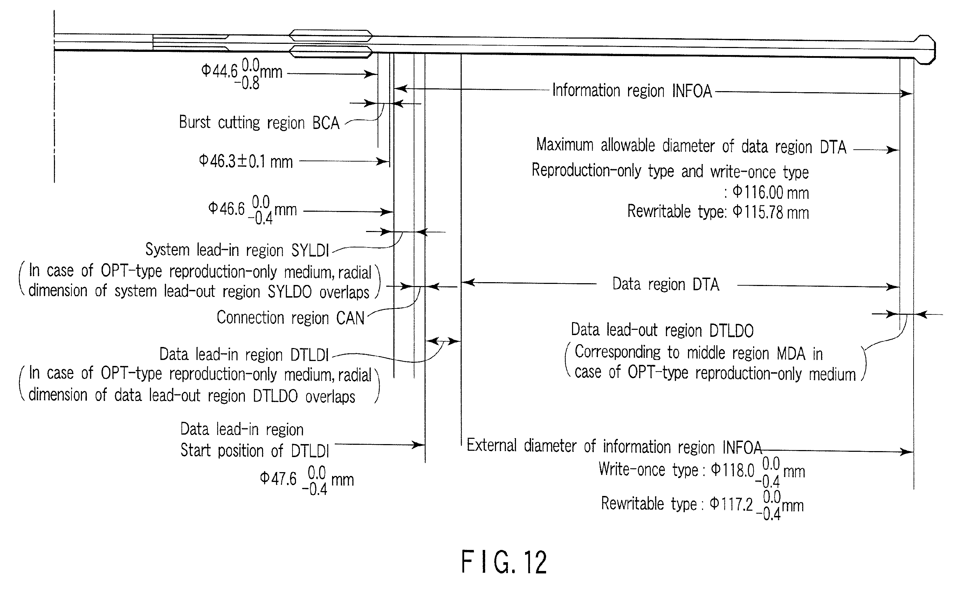

FIG. 12 shows a macroscopic structure in the information storage medium according to this proposal.

A track pitch and a line density of a system lead-in region SYLDI are higher (approximately twofold) than those of a data lead-in region DTLDI.

In this proposal, the recording mark 105 is formed in each of the system lead-in region SYLDI and the data lead-in region DTLDI by using the recording light of 405 nm after forming the information storage medium, thereby recording information.

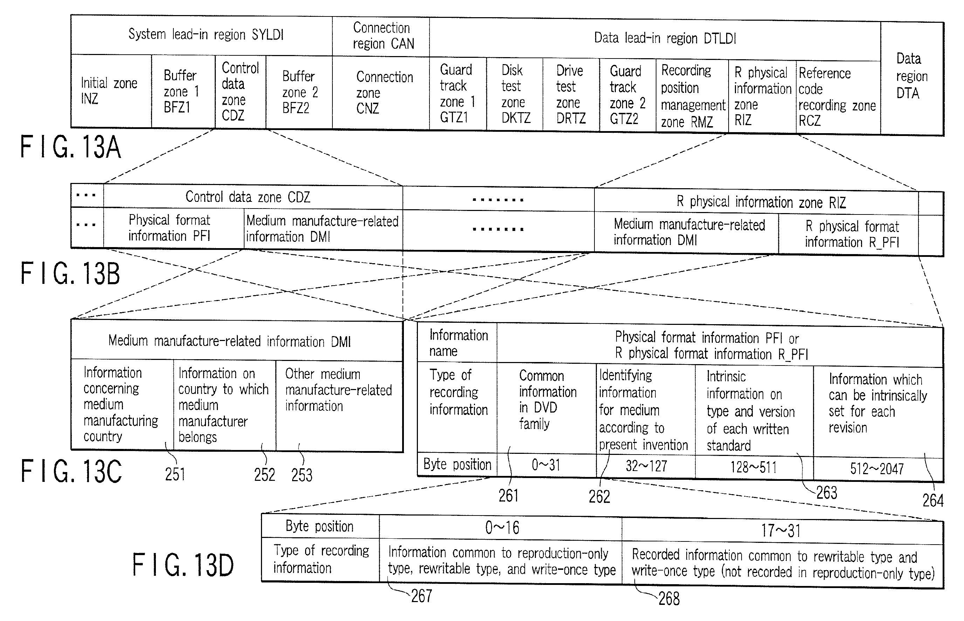

A control data zone CDZ can be recorded in the system lead-in region SYLDI as shown in FIGS. 13A and 13B, and identifying information 262 for the medium according to the present invention can be recorded in a region extending from a 32nd byte to a 127th byte as byte positions in physical format information PFI in this zone.

Additionally, intrinsic information 263 of a type and a version of each written standard and information contents 264 which can be set in accordance with each revision can be recorded, and recording conditions (a write strategy) at the time of recording information in the information storage medium 10 by using the recording light of 405 nm can be recorded in the information contents 264 which can be set in accordance with each revision.

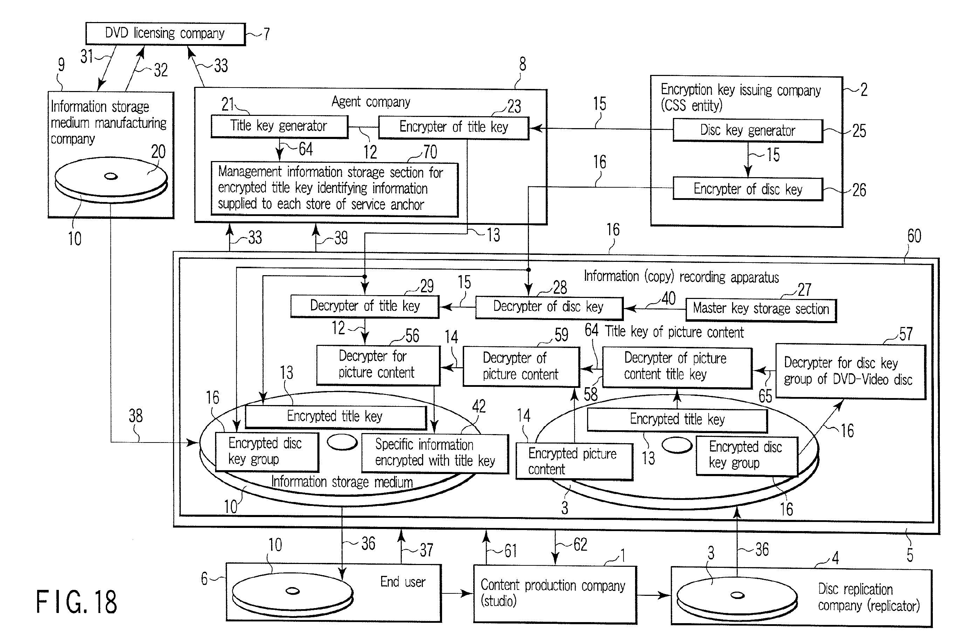

As shown in FIG. 17 or 18, an information storage medium manufacturing company 9 sells the information storage medium 10 which is in a blank state 20.

In this proposal, when the MOD method is used, information in the system lead-in SYLDI (including the physical format information PFI in the control data zone CDZ) depicted in FIGS. 13A and 13B are not recorded in the information storage medium 10 in the blank state 20, and the information storage medium 10 is sold in this state.

According to this method, since the information storage medium manufacturing company 9 does not require a cost of recording in the information storage medium 10 the information in the system lead-in SYLDI (including the physical format information PFI in the control data zone CDZ), it can sell the information storage medium 10 in the blank state 20 at a low price to the service anchor 5.

In case of MOD, the recording conditions (the write strategy) when recording information by using the recording light of 405 nm are recorded in the land pre-pit 108 in advance.

In case of MOD, since the information (copy) recording apparatus 55 having excellent reproduction performance with respect to the information previously recorded in the land pre-pit 108 is used, thus assuring stability of reproducing the information from the land pre-pit 108.

On the other hand, when EST is used, stability of reproducing the information from the land pre-pit 108 in the recording apparatus owned by the end user 6 cannot be assured.

Therefore, in this proposal, the information of the control data zone CDZ (and the system lead-in region SYLDI including this zone) including the physical format information PFI in which the recording conditions (the write strategy) when recording information by using the recording light of 405 nm is recorded in the information storage medium 10 in the blank state 20, and the information storage medium 10 having this information recorded therein is sold.

Since reliability of reproduction from the information (the recording mark 105) recorded by using the recording light of 405 nm is high, reliability of acquiring the information of the recording conditions (the write strategy) used in EST can be greatly improved according to this proposal.

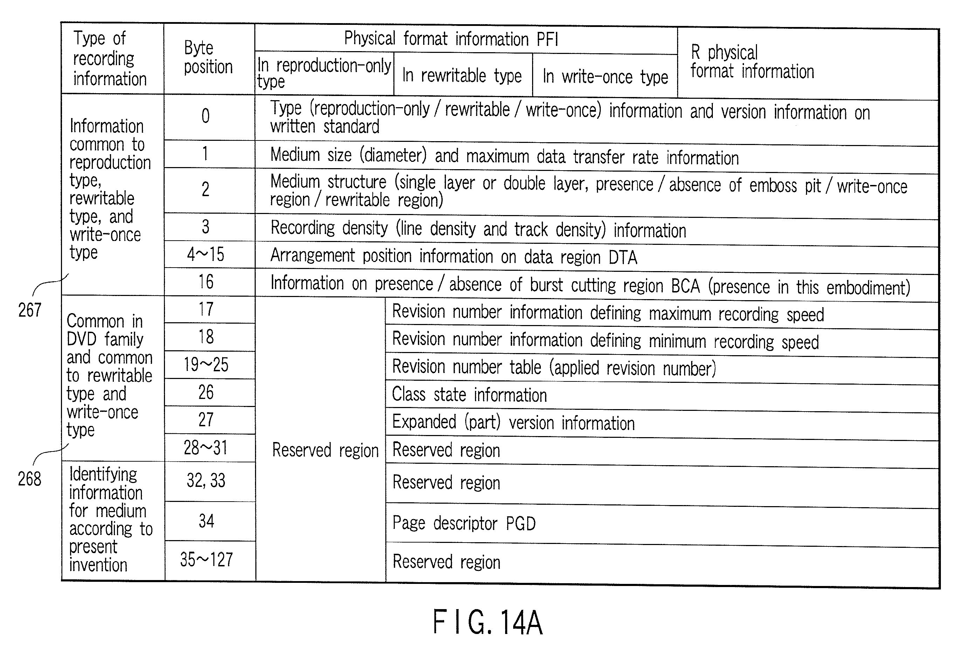

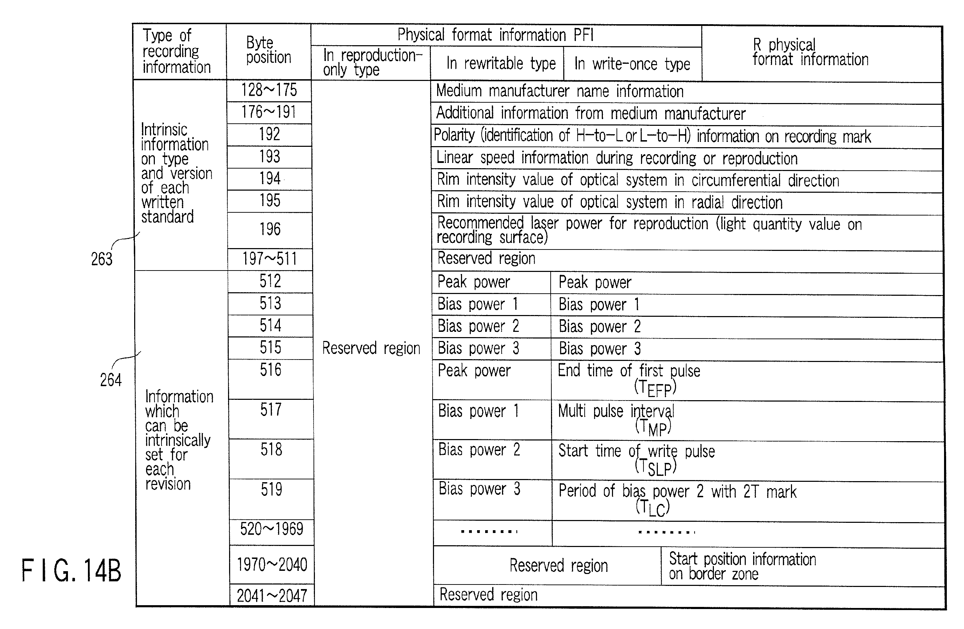

FIGS. 14A and 14B show detailed information contents in the physical format information PFI depicted in FIG. 13C.

It is assumed that information in the information storage medium according to the present invention can be reproduced by a current DVD player.

Therefore, this proposal is characterized in that the identifying information indicating whether a medium is a current reproduction-only DVD ROM disc, a current write-once DVD-R disc, or the information storage medium according to the present invention is provided in the physical format information PFI so that the recording apparatus or the reproduction apparatus can stably operate.

In the proposal depicted in FIGS. 14A and 14B, a page descriptor PGD is arranged at a 34th byte position in a recording region of the identifying information 262 for the medium according to the present invention.

This page descriptor PGD indicates a current reproduction-only DVD-ROM disc or a current write-once DVD-R disc when PGD is 00h;
it means that the information storage medium according to the present invention is used based on MOD when PGD is 10h; and
it means that the information storage medium according to the present invention is used based on EST when PGD is 11h.

As a result, a disc in the recording apparatus or the reproducing apparatus can be readily discriminated at a high speed, and simplification and stabilization of recording/reproducing processing can be assured.

As shown in FIGS. 14A and 14, the recording conditions (the write strategy) when recording by using the recording light of 405 nm can be recorded at a 512th byte position and subsequent positions in a region of the information contents 264 which can be intrinsically set in accordance with each revision.

In the current write-once DVD-R disc, the recording conditions (the write strategy) which vary depending on a type of the information storage medium can be recorded in the same region by enabling recording the recording conditions (the write strategy) when recording by using the light of 650 nm in this region, thus effectively utilizing the region in the physical format information PFI.

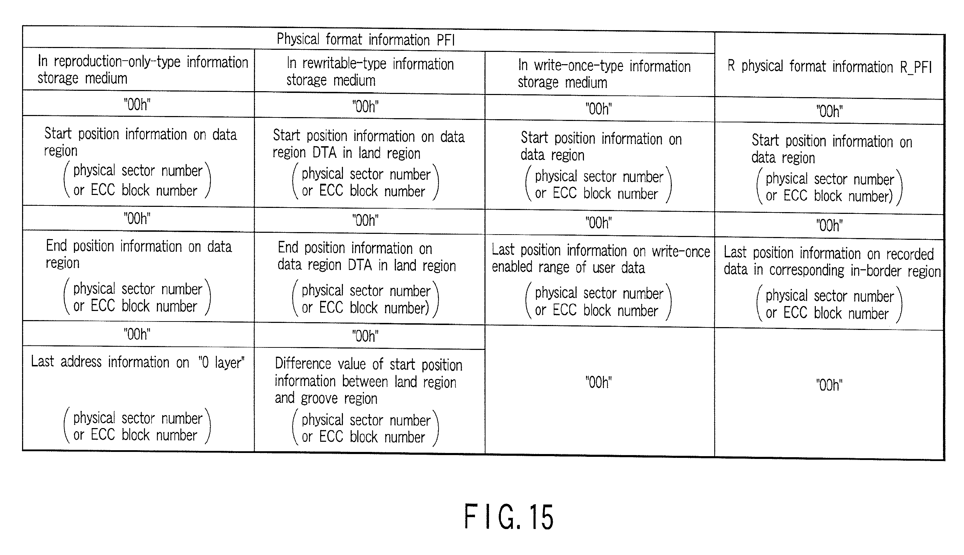

Furthermore, FIG. 15 shows information contents in arrangement position information of the data region DTA depicted in FIGS. 14A and 14B.

Information which is common in the "write-once information storage medium" is recorded in the information recording medium according to this proposal like the current DVD-R disc.

As a method of providing the identifying information indicative of the current reproduction-only DVD-ROM disc, the current write-once DVD-R disc, or the information storage medium according to the present invention in the physical format information PFI, "type information and version number information of a written standard" which are shown not only in FIG. 15 but also at a 0th byte position in FIGS. 14A and 14B may be utilized (a version number may be substituted by a current value) to provide the identifying information and also provide identifying information indicative of using MOD or EST in another proposal according to the present invention.

Moreover, as still another proposal, specific values may be set in revision number information, a revision number table, class state information, or expanded (part) version information provided at 17th to 27th byte positions in FIGS. 14A and 14B to provide the identifying information indicative of the information storage medium according to the present invention and that indicative of use of MOD or use of EST.

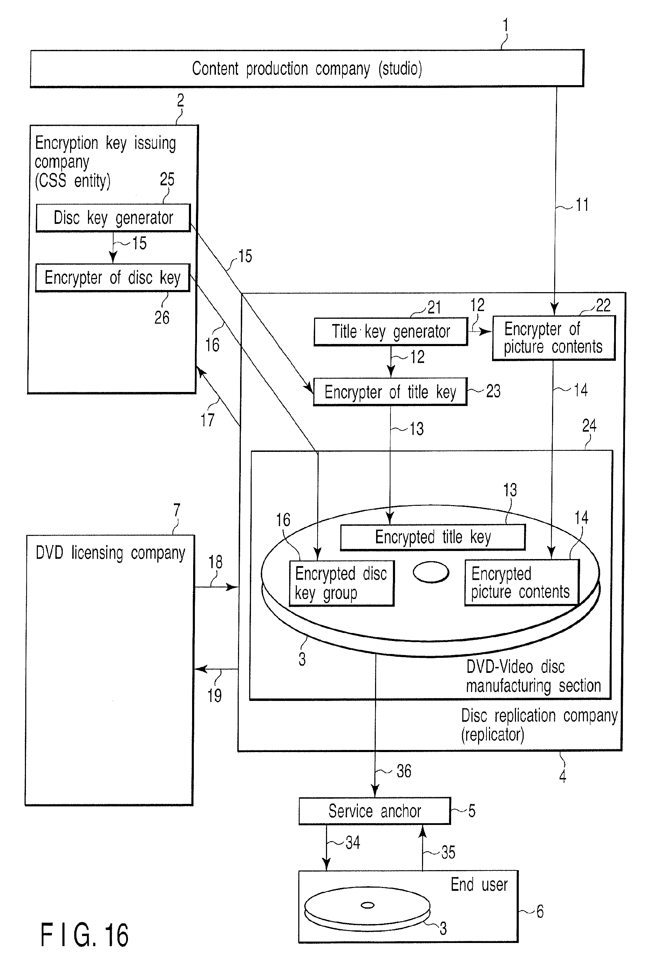

Information contents recorded in a current DVD-Video disc and its forming position will now be explained with reference to FIG. 16.

In the current DVD-Video disc, encryption processing using a CSS mode is carried out as a function of avoiding illegal copy of picture information.

Picture contents 11 produced by a content production company (a studio) 1 are distributed to a disc replication company (a replicator) 4 by using a tape as a medium or based on network transfer.

When avoiding illegal copy of the picture contents 11, the distributed picture contents 11 themselves are not recorded in a DVD-Video disc 3, but encrypted picture contents 14 obtained by encrypting the picture contents 11 with a title key 12 are recorded in the DVD-Video disc 3.

This encryption processing is carried out in a picture content encrypter 22 present in the disc replication company (the replicator) 4, and the title key 12 used for encryption is also issued in a title key generator 21 present in the disc replication company (the replicator) 4.

Additionally, the disc replication company (the replicator) 4 receives disc key information 15 and information of an encrypted disc key group 16 with a fee (with a key fee 17) from a CSS entity 2 which is an en encryption key issuing company, and records this information of the encrypted disc key group 16 in the DVD-Video disc 3.

Further, it encrypts the title key 12 by utilizing the information of the disc key 15 received from the CSS entity 2, and also records an encrypted title key 13 in the same DVD-Video disc 3.

In the current DVD-Video disc, the encrypted disc key group 16 is recorded in a leak-in region (in the control data zone CDZ depicted in FIGS. 13A and 13B in the system lead-in region SYLDI shown in FIG. 12), and information concerning the encrypted title key 13 is decentralized and arranged in specific positions in a physical sector as a basic recording unit of the DVD-Video disc 3 and recorded at these positions.

Furthermore, the disc replication company (the replicator) 4 pays a DVD licensing fee 19 to a DVD licensing company 7 every time it manufactures the DVD-Video disc 3, thus obtaining a DVD-Video disc manufacturing licensed right 18.

An end user 6 pays a purchase price 35 to purchase the DVD-Video disc 3 in which the encrypted disc key group 16, the encrypted title key 13, and the encrypted picture contents 14 are recorded.

Although not shown in a DVD player as the reproduction apparatus owned by the end user 6, a master key is used to decrypt the disc key, and the encrypted picture contents 14 are restored to the non-encrypted picture contents 11 to be reproduced and displayed by utilizing the title key 12 produced (decrypted) by using the decrypted disc key.

The encrypted disc key group 16, the encrypted title key 13, and the encrypted picture contents 14 are recorded as pits having fine irregular shapes in the current DVD-Video disc 3, whereas this proposal is greatly characterized in that they are recorded in the information storage medium 10 as the recording marks 105 formed by using the recording light having a wavelength λw and encrypted specific information 45 (the encrypted picture contents 14) as information concerning the picture contents 11 and encryption related information concerning the CSS mode are distributed through a network.

CPRM is used as an encryption mode for avoiding illegal copy in the DVD-R disc which is the current write-once information storage medium, whereas this proposal is greatly characterized in that the information concerning CSS depicted in FIG. 16 is recorded in the information storage medium 10.

That is, although a pit having an irregular shape is not formed but each recording mark 105 is formed in the information storage medium according to this proposal having the information recorded therein by using the recording light with the wavelength of λw, this information storage medium is recognized by the DVD player (the reproduction apparatus) to enable reproduction as if it is the DVD-Video disc manufactured as shown in FIG. 16.

Therefore, in the information storage medium according to this proposal having the information recorded therein by using the recording light having the wavelength λw, the encrypted disc key group 16 (recorded in the control data zone CDZ in the system lead-in region SYLDI depicted in FIGS. 13A and 13B) which is the information concerning CSS, the encrypted title key 13, and the encrypted picture contents 14 are recorded.

Moreover, this proposal is also characterized in that information indicative of a "reproduction-only medium (a DVD-ROM disc)" is written in the physical format information PFI (or R-PFI) in the control data zone CDZ depicted in FIGS. 13A to 13D in order to enable the existing DVD player (the reproduction apparatus) to recognize the information storage medium as if it is the reproduction-only DVD-Video disc.

As a result, the information recorded in the information storage medium 10 according to the proposal of the present invention can be stably reproduced without imposing a burden on the DVD player (the reproduction apparatus) at all.

Specifically, in this proposal, a written standard type is set to "0000b" in "type information and version number information of a written standard" recorded at the 0th byte position in FIGS. 14A and 14B, thus specifying a DVD-ROM written standard.

Even if the written standard type is specified in this manner, using the information in the page descriptor PGD depicted in FIGS. 14A and 14B enables identification of the information storage medium according to this proposal or the genuine DVD-ROM disc.

Additionally, although presence/absence of an emboss pit and a write-once region or a rewritable region is specified in a medium structure recorded at a second byte position in FIGS. 14A and 14B, values of "b2, b1, and b0" are set to "001" to clearly specify the medium structure with respect to the DVD player (the reproduction apparatus) as if it is a structure having the emboss pit alone.

Information of the medium structure means that a rewritable user region is not provided in a corresponding information storage medium when b2 = 0b; and
it means that the rewritable user region is provided in a corresponding information storage medium when b2 = 1b.

Further, this information means that a write-once user region is not provided in a corresponding information storage medium when b1 = 0b; and
it means that the write-once user region is provided in a corresponding information storage medium when b1 = 1b.

Furthermore, this information means that a user region having an emboss pit formed therein is not provided in a corresponding information storage medium when b0 = 0b; and
it means that the user region having the emboss pit formed therein is provided in a corresponding information storage medium when b0 = 1b.

The encrypted disc key group 16, the encrypted title key 13, and the encrypted picture contents 14 are recorded in the information storage medium 10 used in the MOD method by the information (copy) recording apparatus 55 installed in the service anchor 5, whilst the encrypted disc key group 16, the encrypted title key 13, and the encrypted picture contents 14 are recorded in the information storage medium used in the EST method by the recording apparatus owned by the end user 6.

In any case, according to this proposal, information concerning the CSS related information and specific information, e.g., the picture contents 14 is distributed to the recording apparatus through a network.

The specific information, e.g., the picture contents 14 may be illegally copied during distribution through the network, or the encrypted specific information 42 (the encrypted picture contents 14) recorded in the information storage medium 10 may be illegally decrypted when various kinds of key information concerning CSS are stolen, and hence the risk of illegal copy is increased.

To solve this problem, this proposal is significantly characterized in that the specific information, e.g., the picture contents 14 and various kinds of key information concerning CSS are all encrypted and then distributed through the network.

As a result, even if information leaks through the network, the leaked information is not non-decrypted (plain) information but necessarily encrypted information, and hence it cannot be reused, thus leading to an effect of avoiding illegal copy.

Characteristics of this proposal will now be explained in detail with reference to FIG. 17.

As explained above, information is recorded in the information storage medium 10 used in the MOD method by light having a recording wavelength λw (≠650 nm) in the information (copy) recording apparatus 55 installed in the service anchor 5.

A communication key storage section 52 and a master key storage section 27 are present in this information (copy) recording apparatus 55.

Although these sections look different from each other in FIG. 17, the present invention is not restricted thereto, and both the communication key storage section 52 and the master key storage section 27 may be used in a single memory.

The service anchor 5 pays a communication key fee 49 to a production company (a content provider) 54 of the specific information, e.g., the picture contents 11 to purchase a communication key 44.

The production company (the content provider) 54 of the specific information utilizes this communication key to encrypt the specific information, e.g., the picture contents 11, and distributes specific information 45 encrypted with the communication key to the service anchor 5 through the network.

Furthermore, when the service anchor 5 sells the information storage medium 10 in which this specific information is encrypted and recorded to the end user 6, it pays a replication permission fee 47 according to its earnings to the production company (the content provider) 54 of the specific information.

The specific information 45 encrypted by using the communication key distributed from the specific information production company (the content provider) 54 is once decrypted in a decrypter for the specific information by utilizing information of the already distributed communication key 44.

Immediately after this, this information is encrypted by using the title key 12 and recorded in the information storage medium 10 in the form of specific information 42 encrypted with the title key.

In the current example depicted in FIG. 16, although a disc key 15 is transferred between the encryption key issuing company (the CSS entity) 2 and the disc replication company (the replicator) 4, it is transferred in an environment where a sufficient security measure is taken with respect to this path. As compared with this, in a network path of a system depicted in FIG. 17, a security measure is not sufficient, and the disc key 15 is in danger of leaking to the outside in this path.

On the other hand, in the proposal shown in FIG. 17, the encrypted title key 13 is transferred to the service anchor 5 through the network in place of the plain (non-encrypted) disc key 15.

In order to realize this, according to this proposal, an agent company 8 is arranged between the encryption key issuing company (the CSS entity) 2 and the service anchor 5.

This agent company 8 issues the title key 12 for each title from the title key generator 21.

Then, the title key 13 encrypted by using the disc key 15 transferred from the encryption key issuing company (the CSS entity) 2 in the environment where the sufficient security measure is taken is generated in an encrypter 23 of the title key and distributed to the service anchor 5 through the network.

In the information (copy) recording apparatus 55 in the service anchor 5, the encrypted title key 13 distributed through the network is recorded in the information storage medium 10 as it is.

The service anchor 5 pays a key fee and a DVD licensing fee 33 to the agent company 8 in accordance with the number of times of recording the title key 13 recorded in the information storage medium 10.

The agent company 8 pays the collected DVD licensing fees 33 in a lump sum to the DVD licensing company 7.

Moreover, the DVD licensing company 7 gives an information storage medium manufacturing licensed right 31 to the information storage medium manufacturing company 9 which manufactures the information storage medium 10 in the blank state 20 in place of collecting a DVD licensing fee 32.

The agent company 8 shown in FIG. 17 receives the disc key 15 and the encrypted disc key group 16 from the encryption key issuing company (the CSS entity) 2 like the disc replication company (the replicator) 4, but the agent company 8 directly distributes the encrypted disc key group 16 to the service anchor through the network.

Since the information distributed to the service anchor 5 through the network in this manner is all encrypted information, i.e., the "specific information 45 encrypted with the communication key", the "encrypted disc key group 16", and the "encrypted title key", illegal copy can be avoided even if the information leaks in the network path.

Although FIG. 17 illustrates the information storage medium 10 used in the MOD method, the present invention is not restricted thereto, and it can be also applied to the information storage medium 10 used in the EST method.

In case of EST, although a distribution target through the network is the end user 6, all encrypted information, i.e., the "specific information 45 encrypted with the communication key", the "encrypted disc key group 16", and the "encrypted title key" are likewise distributed to the end user 6 even in this case, thus avoiding illegal copy.

It is to be noted that, in both MOD and EST, since the information concerning SCC distributed through the network matches with the information recorded in the information storage medium 10, i.e., the "encrypted disc key group 16" and the "encrypted title key", processing before recording in the information (copy) recording apparatus 55 can be greatly simplified to reduce a price of the information (copy) recording apparatus 55 and improve reliability of the processing.

Additionally, the decrypter 28 for the disc key in the information (copy) recording apparatus 55 utilizes a master key 40 transferred from the master key storage section 27 to decrypt the encrypted disc key group 16 distributed from the agent company 8 through the network.

The decrypter 29 for the title key utilizes the thus obtained disc key 15 to decrypt the encrypted title key 13 likewise distributed from the agent company 8 through network, and produces the title key 12. This title key 12 is used to encrypt the specific information 43 in the encrypter 41 for the specific information, and the encrypted specific information is recorded in the information storage medium 10.

FIG. 18 shows another proposal according to the present invention.

In FIG. 18, like the proposal depicted in FIG. 17, CSS related information distributed to an information (copy) recording apparatus 60 through a network is encrypted information recorded in an information storage medium 10, i.e., "encrypted disc key group 16" and "encrypted title key".

The proposal shown in FIG. 18 is different from the above example in that a regular DVD-Video disc 3 is subjected to distribution 36 in place of distributing the picture contents 11 through the network.

In the proposal depicted in FIG. 18, encrypted picture contents 14 recorded in this DVD-Video disc 3 is decrypted (decoded) in the information (copy) recording apparatus 60, and the decrypted picture contents 14 are again encrypted and recorded in the information storage medium 10 according to the present invention.

A combination of a recording wavelength, a blue-based dye, and a red-based dye will now be explained in more detail.

As an organic dye material for a recording film, a (red L-to-H) type dye that is changed from red L: Low to H: High is used when a red laser (a wavelength: 650 nm) is utilized for recording and reproduction. As the red L-to-H type dye, a polymethine cyanine-based dye, a polymethine hemicyanine-based dye, or an organic metal complex dye is used, for example. A maximal absorption wavelength is adjusted to approximately 680 to 750 nm. As an example of the polymethine cyanine-based dye, a dye having a cation portion formed of penta-methine cyanine and an anion portion formed of an azo Co complex is effective. As an example of the polymethine hemicyanine-based dye, a dye having a cation portion formed of penta-methine hemicyanine and an anion portion formed of an azo Co complex is effective, for example.

When using a blue laser (a wavelength: 405 nm) to perform recording and a red laser to effect reproduction, a dye in which a blue L-to-H type dye and a red L-to-H type dye are mixed at a predetermined ratio is used. Alternatively, a dye in which the blue L-to-H type dye and a red H-to-L type dye are mixed at a predetermined ratio is used.

As the blue L-to-H type dye, a monomethine cyanine-based dye, a hemicyanine-based dye, a styryl-based dye, or an organic metal complex dye is used. A maximal absorption wavelength is adjusted to approximately 380 to 480 nm.

As the red L-to-H type dye, a polymethine cyanine-based dye, a polymethine hemicyanine-based dye, or an organic metal complex dye is used. A maximal absorption wavelength is adjusted to approximately 680 to 750 nm. As an example of the polymethine cyanine-based dye, a dye having a cation portion formed of penta-methine cyanine and an anion portion formed of an azo Co complex is effective. As an example of the polymethine cyanine-based dye, a dye having a cation portion formed of penta-methine hemicyanine and an anion portion formed of an azo Co complex is effective.

As the red H-to-L type dye, a polymethine cyanine-based dye, a polymethine hemicyanine-based dye, an organic metal complex dye, a quinazoline-based dye, a phthalocyanine-based dye, or a porphyrin-based dye is used. A maximal absorption wavelength is adjusted to approximately 550 to 610 nm. As the red High-to-Low type, there are a refractive index changing type dye and an absorption factor changing type dye, and both the dyes can be used.

It is to be noted that, in regard to a groove shape of the substrate, a groove depth of 10 nm to 40 nm and a groove width of 150 nm to 500 nm are excellent when the red Low-to-High type dye or the red High-to-Low type dye which is of the absorption changing type is used. More preferably, a groove depth of 20 to 30 nm and a groove width of 300 to 450 nm are desirable.

On the other hand, when the red High-to-Low type dye which is of the refractive index changing type is used, a groove depth of 200 nm to 350 nm and a groove width of 250 to 370 are excellent.

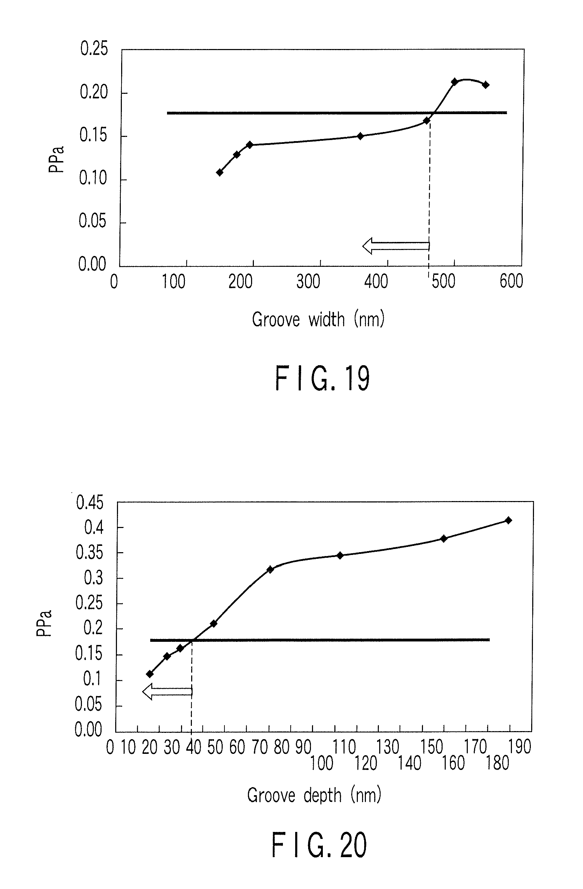

That is, as will be explained hereinafter with reference to FIG. 19, a DVD-R stamper (a groove depth: 30 nm) having groove widths of 543, 498, 454, 354, 193, 175, and 148 nm was fabricated, a polycarbonate substrate having a depth of 0.6 mm was replicated based on an injection molding method, a hemicyanine cation/Co azo complex anion dye was used as a blue dye whilst a penta-methine cyanine/Co azo complex anion dye was used as a red dye to obtain a solution in which these dyes are mixed and dissolved at a weight ratio of 3:7 in a fluorine alcohol solvent (TFP), and the polycarbonate disc substrate was spin-coated with this solution, a pure Ag film was formed based on sputtering (a film thickness: 100 nm), a test disc (a DVD-R type disc) having a dummy substrate with a thickness of 0.6 mm bonded thereto was fabricated, and requirements for a groove width were obtained form a push-pull signal (PPa). As a result, it was confirmed that 470 nm or below is preferable.

Further, although a description will be given hereinafter with reference to FIG. 20, a DVD-R stamper (a groove width: 340 nm) having groove depths of 16, 23, 36, 45, 70, 102, 149, and 178 nm was fabricated, a polycarbonate substrate having a width of 0.6 mm was replicated based on an injection molding method, a hemicyanine cation/Co azo complex anion dye was used as a blue dye whilst a penta-methine cyanine/Co azo complex anion dye was used as a red dye to obtain a solution in which these dyes are mixed and dissolved at a weight ratio of 3:7 in a fluorine alcohol solvent (TFP), the polycarbonate disc substrate was spin-coated with this solution, a pure Ag film was formed based on sputtering (a film thickness: 100 nm), a test disc (a DVD-R type disc) having a dummy substrate having a thickness of 0.6 mm was fabricated, and requirements for a groove depth were obtained from a push-pull signal (PPa). As a result, it was confirmed that 36 nm or below is preferable.

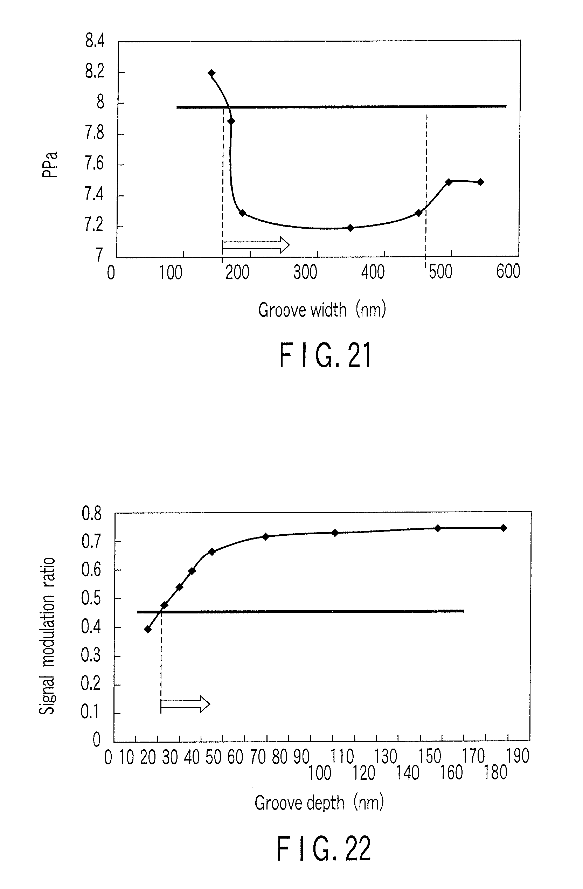

However, as shown in FIG. 21, when requirements for a groove width were obtained from a jitter (an error rate), it was confirmed that 170 nm or above is required.

Furthermore, as shown in FIG. 22, when requirements for a groove depth were obtained from a signal modulation degree, it was confirmed that 20 nm or above is required.

It is to be noted that an HD DVD-R optical system adopting an objective lens having an NA (a numerical aperture) of 0.65 was used as a recording system to measure a push-pull signal (PPa) of a laser beam having a wavelength of 405 nm and a DVD recording optical system having an NA (a numerical aperture) of 0.6 was used as a reproduction system to measure the same of a laser beam having a wavelength of 660 nm. Moreover, a DVD reproduction optical system with a wavelength of 650 nm and NA = 0.6 was used to measure a reflectivity, a jitter, and a signal modulation degree.

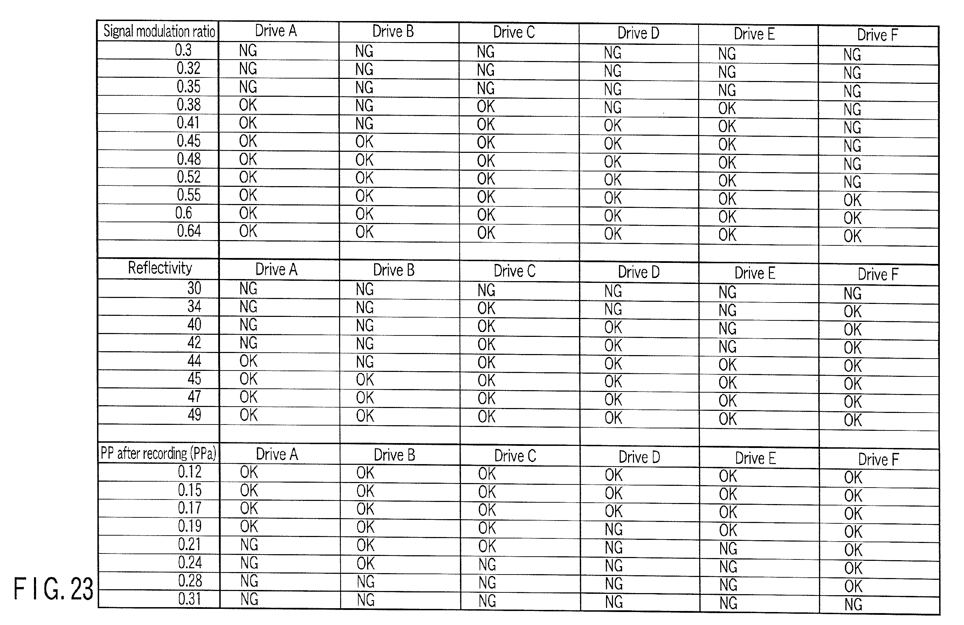

FIG. 23 shows a result obtained by performing a reproduction test with respect to a reflectivity, a jitter, and a signal modulation degree of each recorded disc by using a plurality of commercially available DVD drives (samples A to F). It is needless to say that a drive that cannot perform reproduction corresponds to NG display. Incidentally, a case were NG is turned to OK by updating software (firmware) was confirmed from the drive (sample) F.

As apparent from FIG. 23, there are two or more drives resulting in reproduction NG with respect to a disc having signal modulation degree smaller than 0.45. Although reproduction NG was obtained from the drive F with respect to a disc having a signal modulation degree of 0.45, reproduction OK was obtained by changing firmware to the latest one.

There is one or more drives resulting in reproduction NG with respect to a disc having a reflectivity smaller than 45%. In case of a disc having reflectivity of 44%, two drives including one which can effect reproduction occasionally result in NG.

In regard to a disc having a push-pull (PP) signal (PPa) after recording exceeding 0.17, there are one or more drives resulting in reproduction NG. In case of a disc having this signal equal to 0.19, two drives including one that can effect reproduction occasionally result in NG.

Therefore, from FIG. 23, when a case where the drives result in reproduction NG in some situations and result in reproduction OK in other situations is NG and a case where all the drives result in reproduction OK is acceptable, it can be recognized that a signal can be reproduced from the optical disc according to this proposal under the following conditions:
a signal modulation degree is 0.45 or above;
a reflectivity is 45% or above; and
PP after recording (PPa) is 0.17 or below.

As a groove shape satisfying the above conditions, a groove width is 470 nm or below, and a groove depth falls within the range of 20 nm to 36 nm as explained above. Additionally, a groove width must be set to 170 nm or above in order to set a jitter to 8% or below.

A reproduction possibility rate of the DVD-R disc according to this proposal satisfying the above conditions is 94.3% in two hundred types of DVD drives, and it is reproducible in almost all drives. On the other hand, a production possibility rate of a conventional DVD-R disc is 41.8%, and it cannot be reproduced in half or more of the drives.

As explained above, according to the information recording medium according to the present invention, a usable wavelength is changed depending on recording light and reproducing light with respect to the recording mark, and pre-groove shape and dimension and land pre-pit shape and dimension are set so that a track deviation detection signal and a land pre-pit detection signal can be obtained with respect to the recording light and the reproducing light is hardly affected by a pre-groove or a pre-pit, thereby further stabilizing recording processing and reproduction processing.

Further, a reproduction possibility rate that is substantially equal to that of a compatible machine can be assured in an arbitrary DVD drive that is available from a marketplace, thus expecting stable reproduction.

As explained above, according to the information recording medium of the present invention, lights having different wavelengths can be used as recording light required to form the recording mark and reproducing light required to reproduce the recording mark, and hence recording processing and reproduction processing can be stably effected.

Furthermore, according to the information recording medium of the present invention, in the recording film including the recording layer and the optical reflection layer, a land sandwiched between a pre-groove having an irregular shape and an adjoining pre-groove is defined on an interface between the recording layer and the optical reflection layer, the recording film has a light reflectivity that enables reproduction with light of 650±5 nm, and the recording layer has a recording sensitivity with respect to light having a shorter wavelength than 650±5 nm and enables formation of the recording mark on the pre-groove by using light having a shorter wavelength than 650±5 nm. As a result, the track deviation detection signal and the land pre-pit detection signal can be obtained with respect to the recording light and, at the same time, and the pre-groove shape and dimension and the land pre-pit shape and dimension that prevent the reproducing light from being hardly affected by the pre-groove or the pre-pit are set, thereby further stabilizing the recording processing and reproduction processing.

## Claims

1. An information recording medium **characterized by** comprising:
a recording film (103) including a recording layer and an optical reflection layer; and
a land (109) which is sandwiched between a pre-groove and an adjoining pre-groove (107) and formed on an interface between the recording layer and the optical reflection layer,
wherein the recording film has a light reflectivity that enables reproduction by using light of 650±5 nm,
the recording layer has a recording sensitivity with respect to light having a shorter wavelength than 650±5 nm,
the recording layer enables formation of a recording mark on the pre-groove by using the light having a shorter wavelength than 650±5 nm, and
a reflectivity is not smaller than 45%, and a push-pull signal after recording is not greater than 0.17.

2. An information recording medium **characterized by** comprising:
a recording film (103) including a recording layer and an optical reflection layer; and
a land (109) which is sandwiched between a pre-groove (107) and an adjoining pre-groove and formed on an interface between the recording layer and the optical reflection layer,
wherein the recording film has a light reflectivity that enables reproduction by using light of 650±5 nm,
the recording layer has a recording sensitivity with respect to light having a wavelength equal to or shorter than 650±5 nm,
the recording layer enables formation of a recording mark on the pre-groove by using light having a shorter wavelength than 650±5 nm, and
a reflectivity is not smaller than 45%, a signal modulation degree is not smaller than 0.45, and a push-pull signal after recording is not greater than 0.17.

3. An information recording medium **characterized by** comprising:
a recording film (103) including a recording layer and an optical reflection layer; and
a land (109) which is sandwiched between a pre-groove (107) and an adjoining pre-groove and formed on an interface between the recording layer and the optical reflection layer,
wherein the recording film has a light reflectivity that enables reproduction by using light of 650±5 nm,
a recording sensitivity is provided with respect to light having wavelength equal to or shorter than 650±5 nm, and formation of a recording mark is enabled by using the light having a wavelength equal to or smaller than 650±5 nm, and
a groove width falls within the range of 170 nm to 470 nm, and a groove depth falls with the range of 20 nm to 36 nm.

4. An information recording medium **characterized by** comprising:
a recording film (103) including a recording layer and an optical reflection layer; and
a land (109) which is sandwiched between a pre-groove (107) and an adjoining pre-groove and formed on an interface between the recording layer and the optical reflection layer,
wherein the recording film has a light reflectivity that enables reproduction by using light of 650±5 nm,
a signal reflectivity is provided with respect to light having a wavelength equal to or shorter than 650±5 nm, and formation of a recording mark is enabled by using the light having a wavelength equal to or shorter than 650±5 nm, and
a signal polarity when recording and reproduction are effected with light having a short wavelength is low-to-high, and a signal polarity when reproduction is performed with light of 650±5 nm is low-to-high.

5. An information recording medium **characterized by** comprising:
a recording film (103) including a recording layer and an optical reflection layer; and
a land (109) which is sandwiched between a pre-groove (107) having an irregular shape and an adjoining pre-groove and formed on the substrate,
wherein the recording film has a light reflectivity that enables reproduction by using light of 650±5 nm,
a recording sensitivity is provided with respect to light having a wavelength equal to or shorter than 650±5 nm, and formation of a recording mark is enabled by using the light having a wavelength equal to or shorter than 650±5 nm, and
a signal polarity when recording and reproduction are effected with light having a short wavelength is low-to-high, and a signal polarity when reproduction is performed with light of 650±5 nm is high-to-low.

6. An information recording medium **characterized by** comprising:
a recording film (103) including a recording layer and an optical reflection layer; and
a land (109) which is sandwiched between a pre-groove (107) having an irregular shape and an adjoining pre-groove and formed on the substrate,
wherein the recording film has a light reflectivity that enables reproduction by using light of 650±5 nm,
a recording sensitivity is provided with respect to light having a wavelength equal to or shorter than 650±5 nm, and formation of a recording mark is enabled by using light having a wavelength equal to or shorter than 650±5 nm, and
at least two maximal absorption wavelengths in an absorption spectrum are 380 to 480 nm and 680 to 750 nm.

7. An information recording medium **characterized by** comprising:
a recording film (103) including a recording layer and an optical reflection layer; and
a land (109) which is sandwiched between a pre-groove (107) having an irregular shape and an adjoining pre-groove and formed on the substrate,
wherein the recording film has a light reflectivity that enables reproduction by using light of 650±5 nm,
a recording sensitivity is provided with respect to light having a wavelength equal to or shorter than 650±5 nm, and formation of a recording mark is enabled by using the light having a wavelength equal to or shorter than 650±5 nm, and
at least two maximal absorption wavelengths in an absorption spectrum are 380 to 480 nm and 550 to 610 nm.
